(19) Europäisches Patentamt
European Patent Office
Office européen des brevets

(11) **EP 4 207 075 B1**

(12) **EUROPEAN PATENT SPECIFICATION**

(45) Date of publication and mention
of the grant of the patent:
**14.05.2025 Bulletin 2025/20**

(21) Application number: **21948037.3**

(22) Date of filing: **23.11.2021**

(51) International Patent Classification (IPC):
**G06T 7/90** (2017.01)    **G06T 11/00** (2006.01)
**G06T 5/90** (2024.01)    **G06T 7/11** (2017.01)

(52) Cooperative Patent Classification (CPC):
**G06T 5/90; G06T 7/11; G06T 7/90; G06T 11/001;
G06V 10/26; G06V 10/56; G06V 20/70; H04N 1/62;**
G06T 2207/10024

(86) International application number:
**PCT/CN2021/132511**

(87) International publication number:
**WO 2023/273111 (05.01.2023 Gazette 2023/01)**

(54) **IMAGE PROCESSING METHOD AND APPARATUS, AND COMPUTER DEVICE AND STORAGE MEDIUM**

BILDVERARBEITUNGSVERFAHREN UND -VORRICHTUNG SOWIE COMPUTERVORRICHTUNG UND SPEICHERMEDIUM

PROCÉDÉ ET APPAREIL DE TRAITEMENT D'IMAGE, ET DISPOSITIF INFORMATIQUE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2021 CN 202110727706**

(43) Date of publication of application:
**05.07.2023 Bulletin 2023/27**

(73) Proprietor: **Beijing Sensetime Technology
Development Co., Ltd.
Haidian Beijing 100080 (CN)**

(72) Inventors:
• **TAO, Ran
  Beijing 100080 (CN)**

• **YANG, Ruijian
  Beijing 100080 (CN)**
• **ZHAO, Daiping
  Beijing 100080 (CN)**

(74) Representative: **Lavoix
Bayerstraße 83
80335 München (DE)**

(56) References cited:
EP-A1- 4 207 048      WO-A1-2019/100766
CN-A- 108 492 348     CN-A- 111 127 591
CN-A- 112 614 060     CN-A- 112 767 285
CN-A- 112 767 285     CN-A- 113 240 760
JP-A- 2005 034 355    US-A1- 2010 026 731

**Description**

CROSS-REFERENCE TO RELATED APPLICATION

TECHNICAL FIELD

The disclosure relates to the technical field of image processing, and in particular, to a computer-implemented method and apparatus for image processing, and a storage medium.

BACKGROUND

Image processing is becoming more and more diversified. In many scenarios, for an obtained image of a user, there is often a need to change the color of a specific area corresponding to a target object in the image, such as a hair area, so as to beautify the image of the user.

In the related art, the operation of changing the color of the specific area is mostly realized based on a map or a filter. However, in both modes, an initial color of the specific area is directly replaced based on a target color, such that the color changing effect is unnatural and the color changing effect is poor.

CN112767285A concerns an image processing method and device, electronic equipment and a storage medium. The method comprises the following steps: in response to makeup operation for a target part of a face image, extracting an original color of at least one pixel point in the target part of the face image; acquiring brightness information of at least one pixel point in the target part; determining a target color of at least one pixel point in the target part based on the original color and the brightness information; and fusing the original color and the target color of at least one pixel point in the target part to obtain a fused face image.

CN111127591A provides an image hair dyeing processing method and device, a terminal and a storage medium, and relates to the technical field of image processing. The method comprises the following steps: acquiring a user image; determining a hair area in the user image; performing bleaching processing on the hair area according to the brightness of the hair area to obtain a bleached user image; and performing color adjustment processing on the user image after the bleaching processing to obtain an output image.

SUMMARY

The present invention is set out in the appended set of claims. The embodiments of the disclosure at least provide a computer-implemented method and apparatus for image processing, and a storage medium, so as to enhance a color changing effect in a specific area, and make the color changing effect natural.

In the embodiments of the disclosure, there is a correlation between a color value of a pixel and the luminance corresponding to the pixel, so the initial luminance corresponding to each target pixel can be accurately determined based on the initial color value of the target pixel in a target area corresponding to a target object. The luminance of the pixel can reflect the illumination intensity corresponding to the pixel, and the initial color value of the target pixel is adjusted by using determined initial luminance and color conversion information, so that the adjusted color value of the target pixel is matched with the illumination intensity. Therefore, the color changing effect is natural and realistic, and the color changing effect of the target object is enhanced.

In order to make the above purposes, features, and advantages of the disclosure clearer and easier to understand, preferred embodiments are listed hereinafter and are described in detailed in combination with the drawings.

BRIEF DESCRIPTION OF THE DRAWINGS

FIG. 1 illustrates a flowchart of a method for image processing according to an embodiment of the disclosure.
FIG. 2 illustrates a flowchart of a method for determining initial luminance according to an embodiment of the disclosure.
FIG. 3 illustrates a flowchart of a method for determining the initial luminance based on a brightness corresponding to a target pixel according to an embodiment of the disclosure.
FIG. 4 illustrates a flowchart for determining a target color value according to an embodiment of the disclosure.
FIG. 5 illustrates a flowchart of a method for determining a target area according to an embodiment of the disclosure.
FIG. 6 illustrates a schematic diagram of obtaining a mask image according to an embodiment of the disclosure.
FIG. 7 illustrates a schematic diagram of an apparatus for image processing according to an embodiment of the disclosure.

FIG. 8 illustrates a schematic structural diagram of a computer device according to an embodiment of the disclosure.

DETAILED DESCRIPTION

In order to make the purpose, technical solutions, and advantages of the disclosure clearer, the technical solutions in the embodiments of the disclosure are clearly and completely elaborated below in combination with the drawings of the disclosure. It is apparent that the described embodiments are not all but only part of embodiments of the disclosure. Components, described and illustrated herein, of the embodiments of the disclosure may usually be arranged and designed with various configurations. Therefore, the following detailed description of the embodiments of the disclosure is not intended to limit the scope of protection of the disclosure, but only represents the selected embodiments of the disclosure.

In addition, the terms "first", "second", and the like in this specification and claims of the embodiments of the disclosure are used to distinguish similar objects instead of describing a specific order or sequence. It should be understood that the data termed in such a way are interchangeable in proper circumstances so that the embodiments described herein can be implemented in orders other than the order illustrated or described herein.

"Multiple or a plurality of" as referred to herein means two or more. The term "and/or" is an association describing associated objects, indicating that there may be three relationships. For example, A and/or B may indicate that A exists separately, both A and B exist simultaneously, and B exists separately. The character "/" generally indicates that the contextual object is an "or" relationship.

Through researches, it has been found that image processing is becoming more and more diversified. In many scenarios, for an obtained image of a user, there is often a need to change the color of a specific area corresponding to a target object in the image, such as a hair area, so as to beautify the image of the user. In the related art, the operation of changing the color of a specific area is mostly realized based on a map or a filter. However, in both modes, an initial color of the specific area is directly replaced based on a target color, such that the color changing effect is unnatural and the color changing effect is poor.

Based on the abovementioned researches, the disclosure provides a method and apparatus for image processing, a computer device, and a storage medium. There is a correlation between a color value of a pixel and the luminance corresponding to the pixel, so the initial luminance corresponding to each target pixel can be accurately determined based on the initial color value of the target pixel in a target area corresponding to a target object. The luminance of the pixel can reflect the illumination intensity corresponding to the pixel, and the initial color value of the target pixel is adjusted by using determined initial luminance and color conversion information, so that the adjusted color value of the target pixel is matched with the illumination intensity. Therefore, the color changing effect is natural and realistic, and the color changing effect of the target object is enhanced.

The defects existing in the above solution are results obtained by the inventor after practice and careful research, thus both the problem discovery process and the solutions proposed for the above problems in the present disclosure below shall be the inventor's contribution to the present disclosure in the disclosure process.

It is to be noted that similar reference signs and letters represent similar terms in the following drawings and thus a certain term, once being defined in a drawing, is not required to be further defined and explained in subsequent drawings.

In order to facilitate the understanding of the present embodiment, a method for image processing disclosed in the embodiments of the disclosure is first introduced in detail. An execution subject of the method for image processing provided in the embodiments of the disclosure is generally a computer device with certain computing capacity. In some possible implementations, the method for image processing may be implemented by a processor calling computer-readable instructions stored in a memory.

The method for image processing provided by the embodiments of the disclosure is described below by taking the execution subject being a computer device as an example.

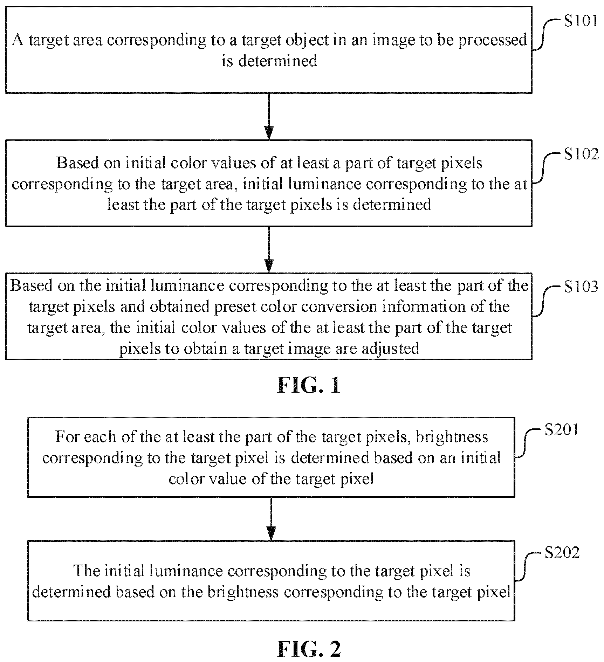

FIG. 1 illustrates a flowchart of a method for image processing provided by an embodiment of the disclosure, which includes the following operations.

At S101, a target area corresponding to a target object in an image to be processed is determined.

Here, the image to be processed may be an overall image including a target object photographed by a photographing apparatus, or may also be an overall image corresponding to any frame of a video in the video, including the target object, photographed by using a photographing apparatus. The target object corresponds to part image in the image to be processed, and may be an object that needs color adjustment in the image to be processed. The object may be the whole or a part of an object or a character, such as hair and clothing. For example, the image to be processed may be an image including hair. The hair may be human hair, or may also be animal hair, etc.

The method provided by the embodiments of the disclosure may be applied to a beauty processing application. When a user has a demand for color adjustment on the target object in the image to be processed by using the beauty processing application (for example, a demand for adjusting the color of hair, that is, the demand for dying hair), a beauty processing request for performing beauty processing on the target object in the image to be processed can be submitted in the beauty processing application.

Then, the beauty processing application may process the image to be processed in response to the beauty processing request, for example, semantic segmentation is performed on the image to be processed, a target object in the image to be processed is determined, then part image corresponding to the target object in the image to be processed may be determined, and then an area corresponding to the part image may be taken as a target area corresponding to the target object.

After that, the color value of the target pixel corresponding to the target area is adjusted according to S102 and S103 described subsequently, so as to realize the beauty processing of the image to be processed.

At S102, based on initial color values of at least a part of target pixels corresponding to the target area, initial luminance corresponding to the at least the part of the target pixels is determined.

Here, the initial color value is an original color value of the target pixel corresponding to the target object, and the initial luminance corresponding to the target pixel may be determined by the illumination intensity corresponding to the target pixel.

After determining the target area corresponding to the target object, all pixels in the image to be processed corresponding to the target area may be taken as the target pixels corresponding to the target object.

For the target pixels corresponding to the target object, at least a part of the target pixels may be selected therefrom, and initial color values of the selected at least part of the target pixels are determined. Then, the initial luminance corresponding to each target pixels of the at least part of the target pixels may be determined based on a conversion relationship between the color value and the luminance and the initial color values of the target pixels, so that the illumination intensity corresponding to each target pixel may be determined.

At S103, based on the initial luminance corresponding to the at least the part of the target pixels and obtained preset color conversion information of the target area, the initial color values of the at least the part of the target pixels to obtain a target image are adjusted.

Here, the preset color conversion information is information determined by a user and used for changing the color of a target object, and aims at the change of the initial color values of all target pixels corresponding to the target object. The preset color conversion information includes a preset color value and color conversion degree information. The preset color value is a color value of the target pixel preset by a user after color adjustment. Here, since the preset color value cannot reflect the illumination intensity corresponding to the target pixel, it is necessary to convert the preset color value into the target color value, and then process the target pixel, thereby obtaining a more natural target image.

The color conversion degree information indicates the change degree of the color change of the target pixel determined by the user, for example, the change degree is 80%, 90%, etc.

In a case that a server determines that a user has a demand for adjusting the color of the target object in an image to be processed, the preset color conversion information of the user for the target area corresponding to the target object may be obtained. Moreover, the operation of obtaining the preset color conversion information may be previous to the operation of determining the target area, or may also be after the operation of determining the target area, or may also be executed synchronously with the operation of determining target area. No limits are made thereto here.

Furthermore, a target color value corresponding to each target pixel in at least part of the target pixels may be determined based on the preset color conversion information and the initial luminance corresponding to at least part of the target pixels. Here, the luminance of the pixel is determined by the illumination intensity corresponding to the pixel. The luminance of the pixel can reflect the illumination intensity, so that the target color value determined based on the initial luminance can be matched with the illumination intensity corresponding to the initial luminance.

Then, the initial color value of each target pixel in at least part of the target pixels may be adjusted by using the determined target color value corresponding to each target pixel in at least part of the target pixels.

The initial color value of each target pixel in at least part of the target pixels may be adjusted to a target color value, and after that, the color of the target object may be updated based on the at least part of the target pixels after the color value adjustment, so as to obtain an updated target object. The color of each target pixel corresponding to the target object in the target image is the color represented by the target color value corresponding to the target pixel.

Thus, the initial luminance corresponding to each target pixel can be accurately determined based on the initial color value of the target pixel in a target area corresponding to a target object. The luminance of the pixel can reflect the illumination intensity corresponding to the pixel, and the initial color value of the target pixel is adjusted by using determined initial luminance and color conversion information, so that the adjusted color value of the target pixel is matched with the illumination intensity. Therefore, the color changing effect is natural and realistic, and the color changing effect of the target object is enhanced.

In an embodiment, for S102, the initial luminance corresponding to the target pixel may be determined according to the method as shown in FIG. 2. As shown in FIG. 2, a flowchart of a method for determining initial luminance provided by an embodiment of the disclosure may include the following operations.

At S201, for each of the at least the part of the target pixels, brightness corresponding to the target pixel is determined based on an initial color value of the target pixel.

Here, the brightness can reflect the illumination intensity. The luminance is determined by the illumination intensity and an illumination area. The color value of the pixel can accurately reflect the brightness corresponding to the color value. The brightness and the luminance may be mutually converted and affected. With the increase or decrease of the brightness, the luminance will change correspondingly.

The image to be processed may be a Red Green Blue (RGB) image. The initial color value of the target pixel may include a color value corresponding to a channel R, a color value corresponding to a channel G, and a color value corresponding to a channel B.

For each of the at least the part of target pixels, the color value corresponding to the channel R, the color value corresponding to the channel G, and the color value corresponding to the channel B of the initial color value can be determined according to the initial color value of the target pixel.

After that, the brightness corresponding to the initial color value may be determined by using a brightness conversion rule according to the brightness conversion rule between the color value of the pixel and the brightness of the pixel and the color value corresponding to each channel of the initial color value of the target pixel.

The conversion rule between the color value of the pixel and the brightness of the pixel may be Formula 1 as follows.

$$Y = R_{lin} * A_1 + G_{lin} * A_2 + B_{lin} * A_3 \quad \text{Formula 1}$$

Herein, Y represents the brightness, $R_{lin}$ represents the color value corresponding to the channel R in the initial color value, $G_{lin}$ represents the color value corresponding to the channel G in the initial color value, $B_{lin}$ represents the color value corresponding to the channel B in the initial color value, $A_1$ represents a brightness conversion coefficient corresponding to the color value of the channel R, $A_2$ represents a brightness conversion coefficient corresponding to the color value of the channel G, and $A_3$ represents a brightness conversion coefficient corresponding to the color value of the channel B.

Moreover, the value range corresponding to $A_1$ may be (0.2101, 0.2205), the value range corresponding to $A_2$ may be (0.7145, 0.7211), and the value range corresponding to $A_3$ may be (0.0671, 0.0750). Exemplarily, in the case of each calculation, the sum of the values of $A_1$, $A_2$, and $A_3$ may be equal to 1.

Then, the brightness corresponding to each of the at least the part of the target pixels may be determined by using Formula 1 and the color value corresponding to each channel of the initial color value of each target pixel. In addition, the brightness Y corresponding to each target pixel is determined by using Formula 1, and $Y \in [0,1]$.

At S202, the initial luminance corresponding to the target pixel is determined based on the brightness corresponding to the target pixel.

Here, for any target pixel with corresponding brightness determined, the luminance of the target pixel may be determined based on the brightness of the target pixel and a conversion rule between the brightness and the luminance, and the determined luminance is taken as the initial luminance corresponding to the target pixel.

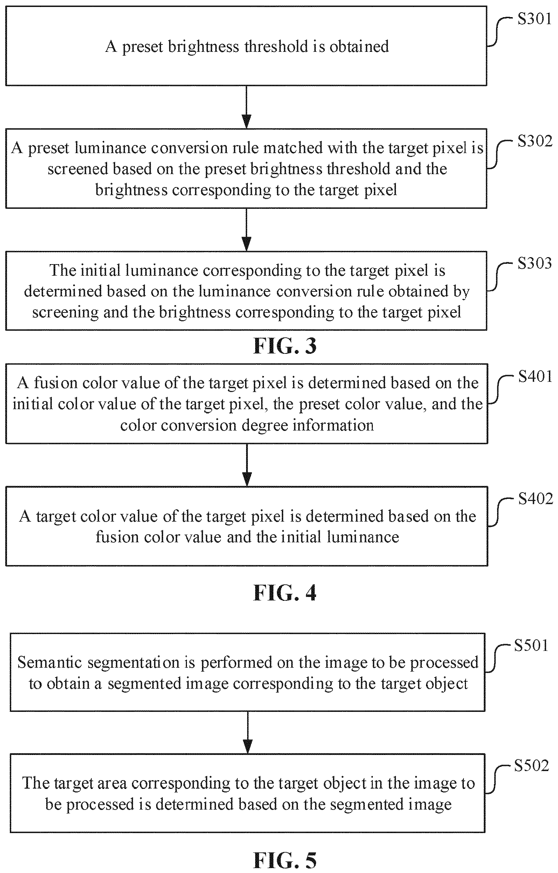

In an embodiment, for S202, the initial luminance may be determined according to the method as shown in FIG. 3. As shown in FIG. 3, the flowchart of a method for determining initial luminance based on a brightness corresponding to a target pixel provided by an embodiment of the disclosure may include the following operations.

At S301, a preset brightness threshold is obtained.

Here, in order to improve the accuracy of luminance conversion, different brightness ranges may correspond to different luminance conversion rules. The same brightness is converted by using different luminance conversion rules, and the obtained luminance is different. A preset brightness threshold is a boundary value of different brightness ranges. Therefore, in the process of determining the initial luminance based on the brightness corresponding to the target pixel, the preset brightness threshold needs to be obtained first.

At S302, a preset luminance conversion rule matched with the target pixel is screened based on the preset brightness threshold and the brightness corresponding to the target pixel.

Here, different brightness ranges correspond to different luminance conversion rules. Different luminance conversion rules may correspond to different luminance conversion coefficients. A same luminance conversion rule may correspond to at least one luminance conversion coefficient.

In a case of determining the luminance corresponding to certain brightness by using the luminance conversion rule, the brightness range that the brightness belongs may be determined by using the preset brightness threshold and the brightness first, and then the luminance conversion rule corresponding to the brightness range is determined according to the brightness range. The brightness range may include a range greater than the preset brightness threshold, or a range less than or equal to the preset brightness threshold.

Then, the luminance corresponding to the brightness may be determined by using the luminance conversion coefficient corresponding to the determined luminance conversion rule and the brightness.

Exemplarily, the preset brightness threshold may be any numerical value in a threshold interval (0.008056, 0.09016). The luminance conversion rule corresponding to different brightness ranges may be as shown in Formula 2.

$$L = \begin{cases} Y * B_1 & Y \leq B_4 \\ Y^{\frac{N}{M}} * B_2 - B_3 & Y > B_4 \end{cases} \quad \text{Formula 2}$$

Herein, L represents the luminance. $Y * B_1$ and $Y^{\frac{N}{M}} * B_2 - B_3$ represent different luminance conversion rules. $B_1$ represents a luminance conversion coefficient corresponding to a luminance conversion rule $Y * B_1$, $B_2$ represents a first luminance conversion coefficient corresponding to the luminance conversion rule $Y^{\frac{N}{M}} * B_2 - B_3$, $B_3$ represents a second luminance conversion coefficient corresponding to the luminance conversion rule $Y^{\frac{N}{M}} * B_2 - B_3$, M and N represent a third luminance conversion coefficient and a fourth luminance conversion coefficient corresponding to the luminance conversion rule $Y^{\frac{N}{M}} * B_2 - B_3$. $B_4$ represents a preset brightness threshold, and $Y \leq B_4$ and $Y > B_4$ represent different brightness ranges.

Moreover, the value range of L may be (0, 1), the value range of $B_1$ may be (800, 1000), the value range of $B_2$ may be (100, 130), the value range of $B_3$ may be (8, 23), the value range of $B_4$ may be (0.008056, 0.09016), M and N may be any value, and M is greater than N.

For each of the at least part of the target pixels, a magnitude relationship between the brightness of the target pixel and the preset brightness threshold may be determined based on the determined brightness of the target pixel and the obtained preset brightness threshold, and then, the luminance conversion rule matched with the target pixel is screened according to the determined magnitude relationship.

At S303, the initial luminance corresponding to the target pixel is determined based on the luminance conversion rule obtained by screening and the brightness corresponding to the target pixel.

In the operation, for the luminance conversion rule obtained by screening and the brightness corresponding to the target pixel, the brightness is converted by using the determined luminance conversion rule to obtain the luminance corresponding to the brightness, and the luminance is taken as the initial luminance corresponding to the target pixel.

Then, the initial luminance corresponding to each of the at least part of the target pixels may be determined based on S301 to S303.

In an embodiment, for S103, a target image may be obtained according to the operations as follows.

At operation one, for each of the at least the part of the target pixels, a target color value of the target pixel is determined based on an initial luminance corresponding to the target pixel, an initial color value of the target pixel.

Here, each of the at least part of the target pixels corresponds to an independent target color value. The target color value is the color value corresponding to the target pixel after the initial color value of the target pixel is adjusted.

For each of the at least part of the target pixels, the initial color value of the target pixel may be converted according to the initial color value of the target pixel, the initial luminance corresponding to the target pixel, and the preset color conversion information, so as to obtain a target color value matched with the initial luminance and the preset color conversion information.

For any target pixel, a preset color value in the preset color conversion information may be converted first according to the initial luminance of the target pixel, so as to convert the preset color value into a first color value matched with the initial luminance. After that, the initial color value may be converted according to the initial luminance of the target pixel, so as to convert the initial color value into a second color value matched with the initial luminance. After that, the first color value may be converted into a first fusion color value by using the color conversion degree information in the preset color conversion information, and the second color is converted into a second fusion color value by using the color conversion degree information.

After that, a target color value matched with the initial luminance and the preset color conversion information may be determined by using the first fusion color value, the second fusion color value, and the initial luminance.

At operation two, the initial color value of the target pixel is determined based on the target color value of the target pixel, so as to obtain a target image.

In the operation, for each target pixel, the color value of the pixel in a target area may be adjusted to the target color value based on the target color value after the target color value of the target pixel is determined, so as to obtain an adjusted color value corresponding to the target pixel. Thus, the color value of the target pixel is adjusted from the initial color value into the target color value.

Then, in the abovementioned mode, the color value of the pixel in the target area may be adjusted from the initial color value into the target color value according to the target color value of each of the at least part of the target pixels corresponding to the determined target area, so that the adjustment of the color value of each of the at least part of the target pixels may be completed, thereby obtaining an adjusted target image.

In addition, the color values of all pixels in the image to be processed can reflect the texture of the image to be processed. If the color values of the pixels in the image to be processed change, the texture corresponding to the image to be processed will also change. Therefore, for the obtained target image, the pixels of the target image include the pixels with the color value adjusted, so the texture corresponding to the target image is also the adjusted texture.

It can be known from the abovementioned embodiments that the preset color conversion information includes a preset color value and color conversion degree information. In an embodiment, for operation one, the target color value may be determined according to the flowchart as shown in FIG. 4. As shown in FIG. 4, a flowchart for determining a target color value provided by an embodiment of the disclosure may include the following operations.

At S401, a fusion color value of the target pixel is determined based on the initial color value of the target pixel, the preset color value, and the color conversion degree information.

Here, the fusion color value is a color value matched with the color conversion degree information.

In the operation, the preset color value and the initial color value are mixed according to the color conversion degree information, so as to obtain a fusion color value matched with the color conversion degree information.

First fusing matched with a color conversion degree is performed on the preset color value and the initial color value according to the color conversion degree corresponding to the color conversion degree information, so as to obtain a third fusion color value.

Then, the initial color value may be subjected to conversion processing by using the color conversion degree, so as to obtain a third color value matched with the color conversion degree, and the preset color value may be subjected to conversion processing by using the color conversion degree, so as to obtain a fourth color value matched with the color conversion degree.

Then, second fusing matched with the color conversion degree may be performed on the third color value and the fourth color value by using the color conversion degree, so as to obtain a fourth fusion color value matched with the color conversion degree.

Finally, the third fusion color value and the fourth fusion color value are fused to obtain a final fusion color value corresponding to the target pixel.

In addition, a fusing process for determining the fusion color value of the target pixel based on the initial color value of the target pixel, the preset color value, and the color conversion degree information is not limited to the abovementioned mode, and a fusing mechanism may be set according to the requirement of a developer. No limits are made thereto here. Different fusing mechanisms may correspond to different fusing modes.

At S402, a target color value of the target pixel is determined based on the fusion color value and the initial luminance.

Here, the fusion color value of the target pixel may be adjusted according to the initial luminance corresponding to the target pixel, so that the target color value matched with the initial luminance is obtained, that is, the target color value of the target pixel is determined.

Exemplarily, for a determination process of the target color value, the color value corresponding to the channel R, the color value corresponding to the channel G, and the color value corresponding to the channel B may be respectively determined according to the fusion color value. Then, a fusion coefficient of the initial luminance corresponding to each channel may be determined first based on the initial luminance according to a fusion rule between the luminance and the color value.

The target color value corresponding to the color value of the channel R, the target color value corresponding to the color value of the channel G, and the target color value corresponding to the color value of the channel B are respectively determined according to the determined fusion coefficient of each channel, the color value of the fusion color value corresponding to each channel, and the conversion rule of the fusing coefficient corresponding to each channel.

After that, the target color value corresponding to the fusion color value and matched with the initial luminance may be determined according to the target color value corresponding to each channel.

Thus, the color conversion degree information indicates the change degree determined by a user for changing the color of a target pixel. Based on the color conversion degree information, the initial color value corresponding to the target pixel and the preset color value are fused, so that the fusion color value obtained by fusing can be matched with the change degree corresponding to the color conversion degree information. Then the target color value of the target pixel is determined by using the initial luminance and the fusion color value, so that the obtained target color value can be matched with both the illumination intensity corresponding to the initial luminance and the change degree corresponding to the color conversion degree information, which can make the color changing effect natural and enhance the color changing effect of the target object, and also meet the color change demand of the user.

In an embodiment, for S101, a target area may be determined according to the following operations. As shown in FIG. 5, a flowchart of a method for determining a target area provided by an embodiment of the disclosure may include the following operations.

At S501, semantic segmentation is performed on the image to be processed to obtain a segmented image corresponding to the target object.

Here, for the obtained image to be processed, the image to be processed may be subjected with semantic segmentation by using a trained semantic segmentation neural network to determine the semantic of each pixel in the image to be processed, and then a segmented image corresponding to the target object may be obtained based on the determined semantic of each pixel. The obtained segmented image may be a mask image.

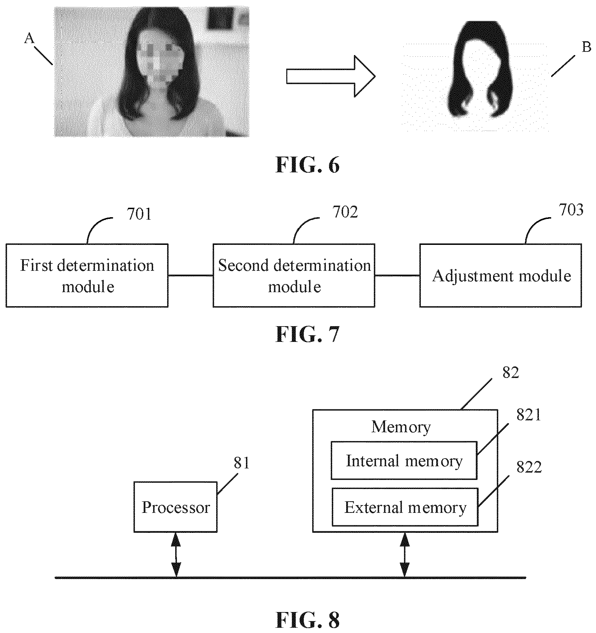

FIG. 6 illustrates a schematic diagram of obtaining a mask image provided by an embodiment of the disclosure. Image A represents an image to be processed, and image B represents a mask image corresponding to a target object (hair) in the image to be processed.

At S502, the target area corresponding to the target object in the image to be processed is determined based on the segmented image.

In the operation, after the segmented image is obtained, the position coordinate of each of the pixels corresponding to the target object in the segmented image may be determined.

Then, the segmented image and the image to be processed may be matched according to the image feature information of the segmented image and the image feature information of the image to be processed, so as to determine the correspondence between the segmented image and the image to be processed. The image feature information may include texture information of an image, size information of the image, and key point information of the image, etc.

The position coordinate of each of the pixels in the image to be processed corresponding to each of the pixels corresponding to a target object in the segmented image may be determined based on the determined correspondence according to the position coordinate of each the pixels corresponding to the target object in the determined segmented image and the position coordinate of each of the pixels in the image to be processed. Then, the area of the image to be processed corresponding to each of the determined position coordinates determined above may be determined as a target area. Thus, the target area of the target object in the image to be processed may be determined.

In some embodiments of the disclosure, before S102, the method further includes an operation of determining the target pixels: all pixels in the target area are taken as the target pixels corresponding to the target object. Here, the target area consists of all pixels corresponding to the target object, so each pixel in the target area may be directly taken as the target pixel corresponding to the target object.

Thus, the segmented image obtained by using semantic segmentation is taken as the image corresponding to the target object. The area, corresponding to the segmented image, of the image to be processed can be accurately determined by using the segmented image. That is, the target area corresponding to the target object may be accurately determined in the image to be processed. Then, the determined target pixels do not include the pixels other than the pixels corresponding to the target object, so that an area that needs color change can be limited, and the accuracy of the area that needs color change can also be improved.

In addition, in a case that the color of the target object appearing in each frame of the obtained video is adjusted, the segmented image of the image corresponding to each frame of the video can be determined in sequence in a mode of determining the target pixel by using the obtained segmented image. Then, the target pixel in the image corresponding to each frame of the video is determined by using the obtained segmented image, so that the accuracy of the target pixel in the determined image corresponding to each frame of video can be improved.

In some embodiments of the disclosure, the color of the target pixel in the image corresponding to each frame of video may be adjusted, that is, the color of the target object in the video may also be adjusted to obtain a target video. Thus, even if the position of the target object in the video changes, due to the accuracy of the determined target pixel, the target pixel in the image corresponding to each frame of video in the target video may be matched with the position of the target object, so that the stability of the texture of the image corresponding to each frame of video in the target video may be realized.

In an embodiment, the obtained image to be processed may be a field image photographed by an Augmented Reality (AR) device. In a case that the AR device photographs the field image, the field image may be directly taken as the image to be processed, so that the image to be processed may be obtained in real time. The AR device may be an intelligent terminal with an AR function held by a user, which may include, but not be limited to, electronic devices capable of presenting an augmented reality effect, such as a mobile phone, a tablet computer, AR glasses, etc.

In some embodiments of the disclosure, after the target image is obtained, the color of the target object may also be changed in real time in an AR scenario by using the target image shown by the AR device.

In an embodiment, for S101, the target area may also be determined according to the following operations.

At operation one, a target character image is obtained, and the target character image is taken as the image to be processed.

Here, before the image to be processed is processed, the image to be processed needs to be obtained first. The obtained image to be processed may be an obtained target character image.

At operation two, semantic segmentation is performed on the image to be processed, and the target area corresponding to the target object in the image to be processed is determined.

The target area corresponding to the target object may include at least one of a human hair area, a human skin area, a human eye area, or at least a part of a clothing area in the target character image. Correspondingly, the target object may include at least one of hair, skin, eyes, and at least a part of clothing.

Taking the target object being hair and the target area corresponding to the target object being the human hair area as an example, after obtaining the image to be processed (the target character image), the image to be processed may be subjected to the semantic segmentation to determine the semantic of each of the pixels in the image to be processed, then the pixels with the semantic of hair may be determined based on the semantics of the pixels, and then the human hair area corresponding to the hair may be determined.

Or, the obtained image to be processed may also be an obtained target object image. The target area corresponding to the target object is at least a part of an object area in the target object image. Exemplarily, the target area corresponding to the target object may be a desktop area, a screen area, a floor area, a tree area, a trunk area, a leaf area, or all areas of a tree.

Taking the target object being a desktop and the target area corresponding to the target object being a desk area as an example, after obtaining the image to be processed (a target animal image), the image to be processed may be subjected to the semantic segmentation to determine the semantic of each of the pixels in the image to be processed, then the pixels with the semantic of the desktop may be determined based on the semantics of the pixels, and then the desktop area corresponding to the desktop may be determined.

Thus, the target character image or the target object image are taken as the image to be processed, so that the color of the target area of the target object is adjusted, for example, the color of the human hair area, the human skin area, the clothing area, or the object area is adjusted.

It can be understood by those skilled in the art that, in the above-mentioned method of the specific implementations, the writing sequence of each step does not mean a strict execution sequence and is not intended to form any limitation to the implementation process and an execution sequence of each operation should be determined by functions and probable internal logic thereof.

Based on the same inventive conception, the embodiments of the disclosure further provide an apparatus for image processing corresponding the method for image processing. The principle of the apparatus in the embodiments of the disclosure for solving the problem is similar to the abovementioned method for image processing of the embodiments of the disclosure, so implementation of the apparatus may refer to implementation of the method. Repeated parts will not be elaborated.

FIG. 7 illustrates a schematic diagram of an apparatus for image processing provided by an embodiment of the disclosure, which includes a first determination module 701, a second determination module 702, and an adjustment module 703.

The first determination module 701 is configured to determine a target area corresponding to a target object in an image to be processed.

The second determination module 702 is configured to determine, based on initial color values of at least a part of target pixels corresponding to the target area, initial luminance corresponding to the at least the part of the target pixels.

The adjustment module 703 is configured to adjust, based on the initial luminance corresponding to the at least the part of the target pixels and obtained preset color conversion information of the target area, the initial color values of the at least the part of the target pixels to obtain a target image.

In a possible implementation, the second determination module 702 includes: a first determination submodule, configured to: for each of the at least the part of the target pixels, determine, based on an initial color value of the target pixel, brightness corresponding to the target pixel; and
a second determination submodule, configured to determine, based on the brightness corresponding to the target pixel, the initial luminance corresponding to the target pixel.

In a possible implementation, the second determination submodule is configured to: obtain a preset brightness threshold;

screen, based on the preset brightness threshold and the brightness corresponding to the target pixel, a preset luminance conversion rule matched with the target pixel; and

determine, based on the luminance conversion rule obtained by screening and the brightness corresponding to the target pixel, the initial luminance corresponding to the target pixel.

In a possible implementation, the adjustment module 703 includes: a third determination submodule, configured to: for each of the at least the part of the target pixels, determine, based on an initial luminance corresponding to the target pixel, an initial color value of the target pixel, and the preset color conversion information, a target color value of the target pixel; and
an adjustment submodule, configured to adjust, based on the target color value of the target pixel, the initial color value of the target pixel to obtain the target image.

In a possible implementation, the preset color conversion information includes a preset color value and color conversion degree information.

The third determination submodule is configured to: determine, based on the initial color value of the target pixel, the preset color value, and the color conversion degree information, a fusion color value of the target pixel; and determine, based on the fusion color value and the initial luminance, the target color value of the target pixel.

In a possible implementation, the first determination module 701 is further configured to: perform semantic segmentation on the image to be processed to obtain a segmented image corresponding to the target object; and determine, based on the segmented image, the target area corresponding to the target object in the image to be processed.

The second determination module 702 is further configured to: before the determining, based on the initial color values of the at least the part of the target pixels corresponding to the target area, the initial luminance corresponding to the at least the part of the target pixels, determine the target pixels according to the following operation:
taking all pixels in the target area as the target pixels corresponding to the target object.

In a possible implementation, the first determination module 701 is configured to: obtain a target character image, and take the target character image as the image to be processed; and

perform semantic segmentation on the image to be processed, and determine the target area corresponding to the target object in the image to be processed, herein the target area corresponding to the target object includes at least one of a human hair area, a human skin area, or at least a part of a clothing area in the target character image; or

obtain a target object image, and take the target object image as the image to be processed; and

perform semantic segmentation on the image to be processed, and determine the target area corresponding to the target object in the image to be processed, herein

the target area corresponding to the target object is at least a part of an object area in the target object image.

The descriptions about the processing flow of each module in the apparatus and interaction flows between various modules may refer to the related descriptions in the abovementioned method embodiments, which will not be elaborated herein.

The embodiments of the disclosure further provide a computer device. FIG. 8 illustrates a schematic structural diagram of a computer device provided by an embodiment of the disclosure, which includes a processor 81 and a memory 82.

The memory 82 stores machine-readable instructions executable by the processor 81. The processor 81 is configured to execute the machine-readable instructions stored in the memory 82. The machine-readable instructions, when executed by the processor 81, cause the processor 81 to perform the following operations. At S101, a target area corresponding to a target object in an image to be processed is determined. At S102, based on initial color values of at least a part of target pixels corresponding to the target area, initial luminance corresponding to the at least the part of the target pixels is determined. At S103, based on the initial luminance corresponding to the at least the part of the target pixels and obtained preset color conversion information of the target area, the initial color values of the at least the part of the target pixels to obtain a target image are adjusted.

The abovementioned memory 82 includes an internal memory 821 and an external memory 822. The internal memory 821 here is also called an internal storage device, and is configured to temporarily store operation data in the processor 81, and data exchanged with the external memory 822, such as a hard disc. The processor 81 exchanges data with the external memory 822 through the internal memory 821.

An execution process of the abovementioned instructions may refer to the operations of the method for image processing in the embodiments of the disclosure, and will not be elaborated herein.

In a case of being implemented in form of software functional module and sold or used as an independent product, the integrated module of the embodiments of the application may also be stored in a computer storage medium. Based on such understanding, those skilled in the art should understand that the embodiments of the application may be provided as a method, a system or a computer program product. Therefore, the present application may adopt the forms of complete hardware embodiments, complete software embodiments or embodiments integrating software and hardware. Moreover, the embodiments of the application may adopt the form of a computer program product implemented on one or more computer storage media containing computer-executable instructions. The storage media include a USB flash disk, a mobile hard disk, Read-Only Memory (ROM), a Random Access Memory (RAM), a magnetic disk memory, an optical memory, etc.

The embodiments of the disclosure further provide a computer-readable storage medium with a computer program stored thereon, herein the program, when executed by a computer device, causes the computer device to perform the operations of the method for image processing in the abovementioned method embodiments. The computer-readable storage medium may be a nonvolatile or volatile computer readable storage medium.

The computer program product of the method for image processing provided by the embodiments of the disclosure includes a computer-readable storage medium storing program codes. The instructions included in the program codes may be used to execute the operations of the method for image processing as described in the abovementioned method embodiments. Reference is made to the abovementioned method embodiments, and will not elaborated herein.

The computer program product may be implemented by means of hardware, software or a combination thereof. In some embodiments of the disclosure, the computer program product is specifically embodied as a computer storage medium, and in some embodiments of the present disclosure, the computer program product is embodied as software products, such as a Software Development Kit (SDK).

Those skilled in the art may clearly learn about that working processes of the apparatus described above may refer to the corresponding processes in the method embodiment for convenient and brief description, which will not be elaborated herein. In the several embodiments provided in the disclosure, it should be understood that the disclosed apparatus and method may be implemented in other modes. The apparatus embodiment described above is only schematic, for example, division of the units is only logic function division, and other division modes may be adopted during practical implementation. For another example, a plurality of units or components may be combined, or some characteristics may be neglected or not executed. In addition, the displayed or discussed mutual couplings or direct couplings or communication connections may be implemented through some communications interfaces. The indirect couplings or communication connections between the apparatuses or modules may be implemented in electrical, mechanical, or other forms.

The units described as separate parts may or may not be physically separated, and parts displayed as units may or may not be physical units, and namely may be located in the same place, or may also be distributed to multiple network units. Some or all of the units may be selected based on actual requirements to achieve the objectives of the solutions of the embodiments.

In addition, each functional unit in each embodiment of the disclosure may be integrated into a processing unit, each unit may also physically exist independently, and two or more than two units may also be integrated into a unit.

In a case that the functions are implemented in a form of a software functional unit and sold or used as an independent product, the functions may be stored in a nonvolatile computer-readable storage medium executable for the processor. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device, or the like) to execute all or part of the steps of the method in each embodiment of the disclosure. The foregoing storage medium includes: various media capable of storing program codes, such as a USB flash disc, a mobile hard disc, a Read-Only Memory (ROM), a Random Access Memory (RAM), a magnetic disc, or a compact disc.

[0138] [00159] It is finally to be noted that the above embodiments are only the specific implementations of the disclosure and are adopted not to limit the disclosure but to describe the technical solutions of the disclosure. The scope of protection of the disclosure is not limited thereto. Therefore, the scope of protection of the disclosure shall be subject to the scope of protection of the claims.

**Claims**

1. A computer-implemented method for image processing, comprising:

    determining (S101) a target area corresponding to a target object in an image to be processed;
    determining (S102), based on initial color values of at least a part of target pixels corresponding to the target area, initial luminance corresponding to the at least the part of the target pixels; and
    **characterized by**
    adjusting (S103), based on the initial luminance corresponding to the at least the part of the target pixels and obtained preset color conversion information of the target area, the initial color values of the at least the part of the target pixels to obtain a target image, wherein the preset color conversion information comprises a preset color value and color conversion degree information, and the color conversion degree information indicates a change degree of a color change of the at least the part of the target pixels determined by a user.

2. The method of claim 1, wherein the determining (S102), based on the initial color values of the at least the part of the target pixels corresponding to the target area, the initial luminance corresponding to the at least the part of the target pixels comprises:
for each of the at least the part of the target pixels,

determining (S201), based on an initial color value of the target pixel, brightness corresponding to the target pixel; and
determining (S202), based on the brightness corresponding to the target pixel, the initial luminance corresponding to the target pixel.

3. The method of claim 2, wherein the determining (S202), based on the brightness corresponding to the target pixel, the initial luminance corresponding to the target pixel comprises:

obtaining (S301) a preset brightness threshold;
screening (S302), based on the preset brightness threshold and the brightness corresponding to the target pixel, a preset luminance conversion rule matched with the target pixel; and
determining (S303), based on the luminance conversion rule obtained by screening and the brightness corresponding to the target pixel, the initial luminance corresponding to the target pixel.

4. The method of any one of claims 1 to 3, wherein the adjusting (S103), based on the initial luminance corresponding to the at least the part of the target pixels and the obtained preset color conversion information of the target area, the initial color values of the at least the part of the target pixels to obtain the target image comprises:
for each of the at least the part of the target pixels,

determining, based on an initial luminance corresponding to the target pixel, an initial color value of the target pixel, and the preset color conversion information, a target color value of the target pixel; and
adjusting, based on the target color value of the target pixel, the initial color value of the target pixel to obtain the target image.

5. The method of claim 4, wherein the determining, based on the initial luminance corresponding to the target pixel, the initial color value of the target pixel, and the preset color conversion information, the target color value of the target pixel comprises:

determining (S401), based on the initial color value of the target pixel, the preset color value, and the color conversion degree information, a fusion color value of the target pixel; and
determining (S402), based on the fusion color value and the initial luminance, the target color value of the target pixel.

6. The method of claim 1, wherein the determining (S101) the target area corresponding to the target object in the image to be processed comprises:

performing (S501) semantic segmentation on the image to be processed to obtain a segmented image corresponding to the target object;
determining (S502), based on the segmented image, the target area corresponding to the target object in the image to be processed; and
before the determining (S102), based on the initial color values of the at least the part of the target pixels corresponding to the target area, the initial luminance corresponding to the at least the part of the target pixels, the method further comprises an operation of determining the target pixels:
taking all pixels in the target area as the target pixels corresponding to the target object.

7. The method of any one of claims 1 to 6, wherein the determining (S101) the target area corresponding to the target object in the image to be processed comprises:

obtaining a target character image, and taking the target character image as the image to be processed; and
performing semantic segmentation on the image to be processed, and determining the target area corresponding to the target object in the image to be processed, wherein the target area corresponding to the target object comprises at least one of a human hair area, a human skin area, or at least a part of a clothing area in the target character image;
or,
obtaining a target object image, and taking the target object image as the image to be processed; and performing semantic segmentation on the image to be processed, and determining the target area corresponding to the target object in the image to be processed, wherein the target area corresponding to the target object is at least a part of an object area in the target object image.

8. An apparatus for image processing, comprising:

a processor (81); and
a memory (82), configured to store instructions executable by the processor (81),
wherein the processor (81) is configured to:

determine a target area corresponding to a target object in an image to be processed;
determine, based on initial color values of at least a part of target pixels corresponding to the target area, initial luminance corresponding to the at least the part of the target pixels; and
**characterized in that** the processor is configured to
adjust, based on the initial luminance corresponding to the at least the part of the target pixels and obtained preset color conversion information of the target area, the initial color values of the at least the part of the target pixels to obtain a target image, wherein the preset color conversion information comprises a preset color value and color conversion degree information, and the color conversion degree information indicates a change degree of a color change of the at least the part of the target pixels determined by a user.

9. The apparatus of claim 8, wherein the processor (81) is configured to:

for each of the at least the part of the target pixels, determine, based on an initial color value of the target pixel, brightness corresponding to the target pixel; and
determine, based on the brightness corresponding to the target pixel, the initial luminance corresponding to the target pixel.

10. The apparatus of claim 9, wherein the processor (81) is configured to: obtain a preset brightness threshold; screen, based on the preset brightness threshold and the brightness corresponding to the target pixel, a preset luminance conversion rule matched with the target pixel; and determine, based on the luminance conversion rule obtained by screening and the brightness corresponding to the target pixel, the initial luminance corresponding to the target pixel.

11. The apparatus of any one of claims 8 to 10, wherein the processor (81) is configured to:

for each of the at least the part of the target pixels, determine, based on an initial luminance corresponding to the target pixel, an initial color value of the target pixel, and the preset color conversion information, a target color value of the target pixel; and
adjust, based on the target color value of the target pixel, the initial color value of the target pixel to obtain the target image.

12. The apparatus of claim 11, wherein the processor (81) is configured to: determine, based on the initial color value of the target pixel, the preset color value, and the color conversion degree information, a fusion color value of the target pixel; and determine, based on the fusion color value and the initial luminance, the target color value of the target pixel.

13. The apparatus of claim 8, wherein the processor (81) is configured to: perform semantic segmentation on the image to be processed to obtain a segmented image corresponding to the target object; determine, based on the segmented image, the target area corresponding to the target object in the image to be processed; and
the processor (81) is further configured to: before the determining, based on the initial color values of the at least the part of the target pixels corresponding to the target area, the initial luminance corresponding to the at least the part of the target pixels, determine the target pixels according to the following operation: taking all pixels in the target area as the target pixels corresponding to the target object.

14. The apparatus of any one of claims 8 to 13, wherein the processor (81) is configured to:

obtain a target character image, and take the target character image as the image to be processed; and perform semantic segmentation on the image to be processed, and
determine the target area corresponding to the target object in the image to be processed, wherein the target area corresponding to the target object comprises at least one of a human hair area, a human skin area, or at least a part of a clothing area in the target character image; or
obtain a target object image, and take the target object image as the image to be processed; and perform semantic segmentation on the image to be processed, and determine the target area corresponding to the target object in the image to be processed, wherein the target area corresponding to the target object is at least a part of an object area in the target object image.

15. A computer-readable storage medium with a computer program stored thereon, wherein the program, when executed by a computer device, causes the computer device to perform the operations of the method for image processing of any one of claims 1 to 7.

**Patentansprüche**

1. Computerimplementiertes Verfahren zur Bildverarbeitung, umfassend:

   Bestimmen (S101) eines Zielbereichs, der einem Zielobjekt in einem zu verarbeitenden Bild entspricht;
   Bestimmen (S102), basierend auf anfänglichen Farbwerten von mindestens einem Teil der Zielpixel, die dem Zielbereich entsprechen, der anfänglichen Luminanz, die dem mindestens einen Teil der Zielpixel entspricht; und **gekennzeichnet durch**:
   anpassen (S103), basierend auf der anfänglichen Luminanz, die dem mindestens einen Teil der Zielpixel entspricht, und den erlangten voreingestellten Farbumwandlungsinformationen des Zielbereichs, der anfänglichen Farbwerte des mindestens einen Teils der Zielpixel, um ein Zielbild zu erlangen, wobei die voreingestellten Farbumwandlungsinformationen einen voreingestellten Farbwert und Farbumwandlungsgradinformationen umfassen, und die Farbumwandlungsgradinformationen einen Änderungsgrad einer Farbänderung des mindestens einen Teils der Zielpixel angeben, der von einem Benutzer bestimmt wird.

2. Verfahren nach Anspruch 1, wobei das Bestimmen (S102), basierend auf den anfänglichen Farbwerten des mindestens Teils der Zielpixel, der dem Zielbereich entspricht, die anfängliche Luminanz umfasst, die dem zumindest dem Teil der Zielpixel entspricht, Folgendes umfasst:
   für jeden des mindestens einen Teils der Zielpixel,

   Bestimmen (S201), basierend auf einem anfänglichen Farbwert des Zielpixels, von Helligkeit, die dem Zielpixel entspricht; und
   Bestimmen (S202), basierend auf der Helligkeit, die dem Zielpixel entspricht, der anfänglichen Luminanz, die dem Zielpixel entspricht.

3. Verfahren nach Anspruch 2, wobei das Bestimmen (S202) der anfänglichen Luminanz, die dem Zielpixel entspricht, basierend auf der Helligkeit, die dem Zielpixel entspricht, Folgendes umfasst:

   Erlangen (S301) eines voreingestellten Helligkeitsschwellenwerts;
   Durchsuchen (S302), basierend auf dem voreingestellten Helligkeitsschwellenwert und der Helligkeit, die dem Zielpixel entspricht, einer voreingestellten Luminanzumwandlungsregel, die mit dem Zielpixel übereinstimmt; und
   Bestimmen (S303), basierend auf der Luminanzumwandlungsregel, die durch Durchsuchen erlangt wird und der Helligkeit, die dem Zielpixel entspricht, der anfänglichen Luminanz, die dem Zielpixel entspricht,.

4. Verfahren nach einem der Ansprüche 1 bis 3, wobei das Anpassen (S103), basierend auf der anfänglichen Luminanz, die zumindest dem Teil der Zielpixel entspricht, und den erlangten voreingestellten Farbumwandlungsinformationen des Zielbereichs, der anfänglichen Farbwerte des zumindest einen Teils der Zielpixel, um das Zielbild zu erlangen, Folgendes umfasst:
   für jeden des mindestens einen Teils der Zielpixel,

   Bestimmen, basierend auf einer anfänglichen Luminanz, die dem Zielpixel entspricht, einem anfänglichen Farbwert des Zielpixels und der voreingestellten Farbumwandlungsinformation, eines Zielfarbwerts des Zielpixels; und
   Anpassen, basierend auf dem Zielfarbwert des Zielpixel, des anfänglichen Farbwerts des Zielpixels, um das Zielbild zu erlangen.

**5.** Verfahren nach Anspruch 4, wobei das Bestimmen, basierend auf der anfänglichen Luminanz, die dem Zielpixel entspricht, dem anfänglichen Farbwert des Zielpixels und den voreingestellten Farbumwandlungsinformation, des Zielfarbwerts des Zielpixels Folgendes umfasst:

Bestimmen (S401), basierend auf dem anfänglichen Farbwert des Zielpixels, dem voreingestellten Farbwert und den Farbumwandlungsgradinformationen, eines Fusionsfarbwerts des Zielpixels; und
Bestimmen (S402), basierend auf dem Fusionsfarbwert und der anfänglichen Luminanz, des Zielfarbwerts des Zielpixels.

**6.** Verfahren nach Anspruch 1, wobei das Bestimmen (S101) des Zielbereichs, der dem Zielobjekt in dem zu verarbeitenden Bild entspricht, Folgendes umfasst:

Durchführen (S501) von semantischer Segmentierung des zu verarbeitenden Bilds, um ein segmentiertes Bild zu erlangen, das dem Zielobjekt entspricht;
Bestimmen (S502), basierend auf dem segmentierten Bild, des Zielbereichs, der dem Zielobjekt in dem zu verarbeitenden Bild entspricht; und
wobei das Verfahren vor dem Bestimmen (S102), basierend auf den anfänglichen Farbwerten des wenigstens einen Teils der Zielpixel, die dem Zielbereich entsprechen, der anfänglichen Luminanz, die dem wenigstens einen Teil der Zielpixel entspricht, ferner einen Vorgang eines Bestimmens der Zielpixel umfasst:
Verwenden aller Pixel in dem Zielbereich als Zielpixel, die dem Zielobjekt entsprechen.

**7.** Verfahren nach einem der Ansprüche 1 bis 6, wobei das Bestimmen (S101) des Zielbereichs, der dem Zielobjekt in dem zu verarbeitenden Bild entspricht, Folgendes umfasst:

Erlangen eines Zielzeichenbilds und Verwenden des Zielzeichenbilds als das zu verarbeitende Bild; und
Durchführen von semantischer Segmentierung des zu verarbeitenden Bilds und Bestimmen des Zielbereichs, der dem Zielobjekt in dem zu verarbeitenden Bild entspricht, wobei der Zielbereich, der dem Zielobjekt entspricht, mindestens einen Bereich aus einem menschlichen Haarbereich, einem menschlichen Hautbereich oder mindestens einen Teil eines Kleidungsbereichs in dem Zielzeichenbild umfasst;
oder
Erlangen eines Zielobjektbilds und Verwenden des Zielobjektbilds als das zu verarbeitende Bild; und Durchführen von semantischer Segmentierung an dem zu verarbeitenden Bild und Bestimmen des Zielbereichs, der dem Zielobjekt in dem zu verarbeitenden Bild entspricht, wobei der Zielbereich, der dem Zielobjekt entspricht, mindestens ein Teil eines Objektbereichs in dem Zielobjektbild ist.

**8.** Vorrichtung zur Bildverarbeitung, umfassend:

einen Prozessor (81); und
einen Speicher (82), der konfiguriert ist, um von dem Prozessor (81) ausführbare Befehle zu speichern;
wobei der Prozessor (81) zu Folgendem konfiguriert ist:

Bestimmen eines Zielbereichs, der einem Zielobjekt in einem zu verarbeitenden Bild entspricht;
Bestimmen, basierend auf anfänglichen Farbwerten von mindestens einem Teil der Zielpixel, die dem Zielbereich entsprechen, der anfänglichen Luminanz, die dem mindestens einen Teil der Zielpixel entspricht; und
**dadurch gekennzeichnet, dass** der Prozessor konfiguriert ist, um, basierend auf der anfänglichen Luminanz, die dem mindestens einen Teil der Zielpixel entspricht, und den erlangten voreingestellten Farbumwandlungsinformationen des Zielbereichs, die anfänglichen Farbwerte des mindestens einen Teils der Zielpixel anzupassen, um ein Zielbild zu erlangen, wobei die voreingestellten Farbumwandlungsinformationen einen voreingestellten Farbwert und Farbumwandlungsgradinformationen umfassen, und die Farbumwandlungsgradinformationen einen Änderungsgrad einer Farbänderung des mindestens einen Teils der Zielpixel angeben, der von einem Benutzer bestimmt wird.

**9.** Vorrichtung nach Anspruch 8, wobei der Prozessor (81) zu Folgendem konfiguriert ist:

für jedes des mindestens Teils der Zielpixel, basierend auf einem anfänglichen Farbwert des Zielpixels, der Helligkeit, die dem Zielpixel entspricht; und
basierend auf der Helligkeit, die dem Zielpixel entspricht; der anfänglichen Luminanz, die dem Zielpixel entspricht.

**10.** Vorrichtung nach Anspruch 9, wobei der Prozessor (81) zu Folgendem konfiguriert ist:

Erlangen eines voreingestellten Helligkeitsschwellenwerts; Durchsuchen, basierend auf dem voreingestellten Helligkeitsschwellenwert und der Helligkeit, die dem Zielpixel entspricht, einer voreingestellten Luminanzumwandlungsregel, die mit dem Zielpixel übereinstimmt; und

Bestimmen, basierend auf der Luminanzumwandlungsregel, die durch Durchsuchen erlangt wird und der Helligkeit, die dem Zielpixel entspricht, der anfänglichen Luminanz, die dem Zielpixel entspricht.

**11.** Vorrichtung nach einem der Ansprüche 8 bis 10, wobei der Prozessor (81) zu Folgendem konfiguriert ist: für jeden des mindestens einen Teils der Zielpixel, Bestimmen, basierend auf einer anfänglichen Luminanz, die dem Zielpixel entspricht, einem anfänglichen Farbwert des Zielpixels und der voreingestellten Farbumwandlungsinformation, eines Zielfarbwerts des Zielpixels; und

Anpassen, basierend auf dem Zielfarbwert des Zielpixel, des anfänglichen Farbwerts des Zielpixels, um das Zielbild zu erlangen.

**12.** Vorrichtung nach Anspruch 11, wobei der Prozessor (81) zu Folgendem konfiguriert ist:

Bestimmen, basierend auf dem anfänglichen Farbwert des Zielpixels, dem voreingestellten Farbwert und den Farbumwandlungsgradinformationen, eines Fusionsfarbwerts des Zielpixels;

und Bestimmen, basierend auf dem Fusionsfarbwert und der anfänglichen Luminanz, des Zielfarbwerts des Zielpixels.

**13.** Vorrichtung nach Anspruch 8, wobei der Prozessor (81) zu Folgendem konfiguriert ist:

Durchführen von semantischer Segmentierung des zu verarbeitenden Bilds, um ein segmentiertes Bild zu erlangen, das dem Zielobjekt entspricht; Bestimmen, basierend auf dem segmentierten Bild, des Zielbereichs, der dem Zielobjekt in dem zu verarbeitenden Bild entspricht; und

wobei der Prozessor (81) ferner zu Folgendem konfiguriert ist: vor dem Bestimmen, basierend auf den anfänglichen Farbwerten des mindestens einen Teils der Zielpixel, der dem Zielbereich entspricht, die anfängliche Luminanz umfasst, die dem zumindest dem Teil der Zielpixel entspricht, Bestimmen der Zielpixel gemäß dem folgenden Vorgang: Verwenden aller Pixel in dem Zielbereich als Zielpixel, die dem Zielobjekt entsprechen.

**14.** Vorrichtung nach einem der Ansprüche 8 bis 13, wobei der Prozessor (81) zu Folgendem konfiguriert ist: Erlangen eines Zielzeichenbilds und Verwenden des Zielzeichenbilds als das zu verarbeitende Bild; und Durchführen von semantischer Segmentierung des zu verarbeitenden Bilds und Bestimmen des Zielbereichs, der dem Zielobjekt in dem zu verarbeitenden Bild entspricht, wobei der Zielbereich, der dem Zielobjekt entspricht, mindestens einen Bereich aus einem menschlichen Haarbereich, einem menschlichen Hautbereich oder mindestens einen Teil eines Kleidungsbereichs in dem Zielzeichenbild umfasst; oder

Erlangen eines Zielobjektbilds und Verwenden des Zielobjektbilds als das zu verarbeitende Bild; und Durchführen von semantischer Segmentierung an dem zu verarbeitenden Bild und Bestimmen des Zielbereichs, der dem Zielobjekt in dem zu verarbeitenden Bild entspricht, wobei der Zielbereich, der dem Zielobjekt entspricht, mindestens ein Teil eines Objektbereichs in dem Zielobjektbild ist.

**15.** Computerlesbares Speichermedium mit einem darauf gespeicherten Computerprogramm, wobei das Programm, wenn es von einer Computervorrichtung ausgeführt wird, die Computervorrichtung veranlasst, die Vorgänge des Verfahrens zur Bildverarbeitung nach einem der Ansprüche 1 bis 7 durchzuführen.

**Revendications**

**1.** Procédé de traitement d'image mis en œuvre par ordinateur, comprenant :

déterminer (S101) une zone cible correspondant à un objet cible dans une image à traiter ;

déterminer (S102), sur la base des valeurs de couleur initiales d'au moins une partie des pixels cibles correspondant à la zone cible, la luminance initiale correspondant à au moins la partie des pixels cibles ; et

**caractérisé par**

ajuster (S103), sur la base de la luminance initiale correspondant à au moins la partie des pixels cibles et des informations de conversion de couleur prédéfinies obtenues pour la zone cible, les valeurs de couleur initiales d'au moins la partie des pixels cibles pour obtenir une image cible, dans lequel les informations de conversion de couleur prédéfinies comprennent une valeur de couleur prédéfinie et des informations sur le degré de conversion de couleur, et les informations sur le degré de conversion de couleur indiquent un degré de changement de couleur d'au moins la partie des pixels cibles déterminée par un utilisateur.

2. Procédé selon la revendication 1, dans lequel la détermination (S102), basée sur les valeurs de couleur initiales d'au moins la partie des pixels cibles correspondant à la zone cible, la luminance initiale correspondant à au moins la partie des pixels cibles comprend :
pour chacun des pixels de l'au moins la partie des pixels cibles,

déterminer (S201), sur la base d'une valeur de couleur initiale du pixel cible, la luminosité correspondant au pixel cible ; et
déterminer (S202), sur la base de la luminosité correspondant au pixel cible, la luminance initiale correspondant au pixel cible.

3. Procédé selon la revendication 2, dans lequel la détermination (S202), basée sur la luminosité correspondant au pixel cible, de la luminance initiale correspondant au pixel cible comprend :

obtenir (S301) un seuil de luminosité prédéfini ;
sélectionner (S302), en fonction du seuil de luminosité prédéfini et de la luminosité correspondant au pixel cible, une règle de conversion de luminance prédéfinie correspondant au pixel cible ; et
déterminer (S303), sur la base de la règle de conversion de la luminance obtenue par sélection et de la luminosité correspondant au pixel cible, la luminance initiale correspondant au pixel cible.

4. Procédé selon l'une quelconque des revendications 1 à 3, dans lequel l'ajustement (S103), basé sur la luminance initiale correspondant à au moins la partie des pixels cibles et l'information de conversion de couleur prédéfinie obtenue de la zone cible, les valeurs de couleur initiales d'au moins la partie des pixels cibles pour obtenir l'image cible comprend :
pour chacun des pixels de l'au moins la partie des pixels cibles,

déterminer, sur la base d'une luminance initiale correspondant au pixel cible, d'une valeur de couleur initiale du pixel cible et des informations de conversion de couleur prédéfinies, une valeur de couleur cible du pixel cible ; et
ajuster, sur la base de la valeur de couleur cible du pixel cible, la valeur de couleur initiale du pixel cible afin d'obtenir l'image cible.

5. Procédé selon la revendication 4, dans lequel la détermination, basée sur la luminance initiale correspondant au pixel cible, la valeur de couleur initiale du pixel cible et l'information de conversion de couleur prédéfinie, la valeur de couleur cible du pixel cible comprend :

déterminer (S401), sur la base de la valeur de couleur initiale du pixel cible, de la valeur de couleur prédéfinie et de l'information sur le degré de conversion des couleurs, une valeur de couleur de fusion du pixel cible ; et
déterminer (S402), sur la base de la valeur de couleur de fusion et de la luminance initiale, la valeur de couleur cible du pixel cible.

6. Procédé selon la revendication 1, dans lequel la détermination (S101) de la zone cible correspondant à l'objet cible dans l'image à traiter comprend :

effectuer (S501) une segmentation sémantique sur l'image à traiter pour obtenir une image segmentée correspondant à l'objet cible ;
déterminer (S502), sur la base de l'image segmentée, la zone cible correspondant à l'objet cible dans l'image à traiter ; et
avant la détermination (S102), sur la base des valeurs de couleur initiales d'au moins la partie des pixels cibles correspondant à la zone cible, de la luminance initiale correspondant à au moins la partie des pixels cibles, le procédé comprend en outre une opération de détermination des pixels cibles :
en considérant tous les pixels de la zone cible comme les pixels cibles correspondant à l'objet cible.

7. Procédé selon l'une quelconque des revendications 1 à 6, dans lequel la détermination (S101) de la zone cible correspondant à l'objet cible dans l'image à traiter comprend :

obtenir une image de caractère cible, et prendre l'image de caractère cible comme image à traiter ; et effectuer une segmentation sémantique sur l'image à traiter, et déterminer la zone cible correspondant à l'objet cible dans l'image à traiter, la zone cible correspondant à l'objet cible comprenant au moins une zone de cheveux humains, une zone de peau humaine, ou au moins une partie d'une zone de vêtements dans l'image de caractère cible ; ou,

obtenir une image de l'objet cible, et prendre l'image de l'objet cible comme image à traiter ; et effectuer une segmentation sémantique sur l'image à traiter, et déterminer la zone cible correspondant à l'objet cible dans l'image à traiter, dans laquelle la zone cible correspondant à l'objet cible est au moins une partie d'une zone d'objet dans l'image de l'objet cible.

8. Appareil de traitement d'image comprenant :

un processeur (81) ; et
une mémoire (82) configurée pour le stockage d'instructions exécutables par le processeur (81) ;
dans lequel le processeur (81) est conçu pour :

déterminer une zone cible correspondant à un objet cible dans une image à traiter ;
déterminer, sur la base des valeurs de couleur initiales d'au moins une partie des pixels cibles correspondant à la zone cible, la luminance initiale correspondant à au moins la partie des pixels cibles ; et
**caractérisé en ce que** le processeur est configuré pour ajuster, en fonction de la luminance initiale correspondant à au moins la partie des pixels cibles et des informations de conversion de couleur prédéfinies obtenues pour la zone cible, les valeurs de couleur initiales d'au moins la partie des pixels cibles pour obtenir une image cible, dans lequel les informations de conversion de couleur prédéfinies comprennent une valeur de couleur prédéfinie et des informations de degré de conversion de couleur, et les informations de degré de conversion de couleur indiquent un degré de changement de couleur d'au moins la partie des pixels cibles déterminé par un utilisateur.

9. Appareil selon la revendication 8, dans lequel le processeur (81) est configuré pour :

pour chaque pixel d'au moins la partie des pixels cibles, déterminer, sur la base d'une valeur de couleur initiale du pixel cible, la luminosité correspondant au pixel cible ; et
déterminer, sur la base de la luminosité correspondant au pixel cible, la luminance initiale correspondant au pixel cible.

10. Appareil selon la revendication 9, dans lequel le processeur (81) est configuré pour : obtenir un seuil de luminosité prédéfini ; filtrer, sur la base du seuil de luminosité prédéfini et de la luminosité correspondant au pixel cible, une règle de conversion de luminance prédéfinie correspondant au pixel cible ; et déterminer, sur la base de la règle de conversion de luminance obtenue par filtrage et de la luminosité correspondant au pixel cible, la luminance initiale correspondant au pixel cible.

11. Appareil selon l'une quelconque des revendications 8 à 10, dans lequel le processeur (81) est configuré pour : pour chaque pixel d'au moins la partie des pixels cibles, déterminer, sur la base d'une luminance initiale correspondant au pixel cible, d'une valeur de couleur initiale du pixel cible et de l'information de conversion de couleur prédéfinie, une valeur de couleur cible du pixel cible ; et
ajuster, sur la base de la valeur de couleur cible du pixel cible, la valeur de couleur initiale du pixel cible pour obtenir l'image cible.

12. Appareil selon la revendication 11, dans lequel le processeur (81) est configuré pour : déterminer, sur la base de la valeur de couleur initiale du pixel cible, de la valeur de couleur prédéfinie et de l'information sur le degré de conversion des couleurs, une valeur de couleur de fusion du pixel cible ; et déterminer, sur la base de la valeur de couleur de fusion et de la luminance initiale, la valeur de couleur cible du pixel cible.

13. Appareil selon la revendication 8, dans lequel le processeur (81) est configuré pour :
effectuer une segmentation sémantique sur l'image à traiter pour obtenir une image segmentée correspondant à l'objet cible ; déterminer, sur la base de l'image segmentée, la zone cible correspondant à l'objet cible dans l'image à traiter ; et

le processeur (81) est en outre configuré pour : avant de déterminer, sur la base des valeurs de couleur initiales d'au moins la partie des pixels cibles correspondant à la zone cible, la luminance initiale correspondant à au moins la partie des pixels cibles, déterminer les pixels cibles selon l'opération suivante : prendre tous les pixels dans la zone cible comme les pixels cibles correspondant à l'objet cible.

14. Appareil selon l'une quelconque des revendications 8 à 13, dans lequel le processeur (81) est configuré pour : obtenir une image du personnage cible, et prendre l'image du personnage cible comme image à traiter ; et effectuer une segmentation sémantique sur l'image à traiter, et déterminer la zone cible correspondant à l'objet cible dans l'image à traiter, dans laquelle la zone cible correspondant à l'objet cible comprend au moins l'une des zones de cheveux humains, une zone de peau humaine, ou au moins une partie d'une zone de vêtements dans l'image du personnage cible ; ou

obtenir une image de l'objet cible, et prendre l'image de l'objet cible comme image à traiter ; et effectuer une segmentation sémantique sur l'image à traiter, et déterminer la zone cible correspondant à l'objet cible dans l'image à traiter, la zone cible correspondant à l'objet cible étant au moins une partie d'une zone d'objet dans l'image de l'objet cible.

15. Support de stockage lisible par ordinateur sur lequel est stocké un programme informatique, dans lequel le programme, lorsqu'il est exécuté par un dispositif informatique, permet à ce dernier d'effectuer les opérations du procédé de traitement d'image selon l'une quelconque des revendications 1 à 7.

```
┌────────────────────────────────────────────────────────────┐
│                                                              │  ⌐S101
│  A target area corresponding to a target object in an image to be processed │
│                          is determined                       │
│                                                              │
└────────────────────────────────────────────────────────────┘
                              │
                              ▼
┌────────────────────────────────────────────────────────────┐
│                                                              │  ⌐S102
│          Based on initial color values of at least a part of target pixels │
│  corresponding to the target area, initial luminance corresponding to the at │
│            least the part of the target pixels is determined │
│                                                              │
└────────────────────────────────────────────────────────────┘
                              │
                              ▼
┌────────────────────────────────────────────────────────────┐
│  Based on the initial luminance corresponding to the at least the part of the │  ⌐S103
│     target pixels and obtained preset color conversion information of the │
│     target area, the initial color values of the at least the part of the target │
│               pixels to obtain a target image are adjusted │
└────────────────────────────────────────────────────────────┘
```

**FIG. 1**

```
┌────────────────────────────────────────────────────────────┐
│                                                              │  ⌐S201
│      For each of the at least the part of the target pixels, brightness │
│    corresponding to the target pixel is determined based on an initial │
│                  color value of the target pixel             │
│                                                              │
└────────────────────────────────────────────────────────────┘
                              │
                              ▼
┌────────────────────────────────────────────────────────────┐
│                                                              │  ⌐S202
│           The initial luminance corresponding to the target pixel is │
│  determined based on the brightness corresponding to the target pixel │
│                                                              │
└────────────────────────────────────────────────────────────┘
```

**FIG. 2**

| A preset brightness threshold is obtained | S301 |

| A preset luminance conversion rule matched with the target pixel is screened based on the preset brightness threshold and the brightness corresponding to the target pixel | S302 |

| The initial luminance corresponding to the target pixel is determined based on the luminance conversion rule obtained by screening and the brightness corresponding to the target pixel | S303 |

**FIG. 3**

| A fusion color value of the target pixel is determined based on the initial color value of the target pixel, the preset color value, and the color conversion degree information | S401 |

| A target color value of the target pixel is determined based on the fusion color value and the initial luminance | S402 |

**FIG. 4**

| Semantic segmentation is performed on the image to be processed to obtain a segmented image corresponding to the target object | S501 |

| The target area corresponding to the target object in the image to be processed is determined based on the segmented image | S502 |

**FIG. 5**

**FIG. 6**

**FIG. 7**

**FIG. 8**

**REFERENCES CITED IN THE DESCRIPTION**

**Patent documents cited in the description**

- CN 112767285 A
- CN 111127591 A